Europäisches Patentamt

European Patent Office

Office européen des brevets

(19)

(11) Veröffentlichungsnummer: **0 182 981**
**B1**

(12) **EUROPÄISCHE PATENTSCHRIFT**

(45) Veröffentlichungstag der Patentschrifft:
**17.01.90**

(21) Anmeldenummer: **85110791.2**

(22) Anmeldetag: **28.08.85**

(51) Int. Cl. ⁴: **G 02 B 6/44, B 65 H 49/34**

(54) Vorrichtung zum Abziehen eines Lichtwellenleiters aus einem angetriebenen, rotierenden Teller.

(30) Priorität: **28.11.84 DE 3443336**

(43) Veröffentlichungstag der Anmeldung:
**04.06.86 Patentblatt 86/23**

(45) Bekanntmachung des Hinweises auf die Patenterteilung:
**17.01.90 Patentblatt 90/03**

(84) Bennante Vertragsstaaten:
**AT BE CH FR GB IT LI NL SE**

(56) Entgegenhaltungen:
**DE-A-3 432 097**
**US-A-3 342 429**
**US-A-3 667 509**
**US-A-4 125 644**

(73) Patentinhaber: **Frisch Kabel- und Versellmaschinenbau GmbH**
**Postfach 12 67 Kaiserswerther Strasse 79**
**D-4030 Ratingen (DE)**

(72) Erfinder: **Düwelhenke, Rainer**
**Ulenbroich 20**
**D-4030 Ratingen (DE)**
Erfinder: **Meyer, Joachim**
**Tiefenbroicherstrasse 75**
**D-4030 Ratingen 4 (DE)**

(74) Vertreter: **Schneider, Wilhelm, Dipl.-Phys.**
**c/o kabelmetal electro GmbH Dipl.-Phys. Wilhelm Schneider Dipl.-Ing. Eberhard Mende Dipl.-Ing. Roger Döring Kabelkamp 20 Postfach 260**
**D-3000 Hannover 1 (DE)**

LIBERGRAF, STOCKHOLM 1990

## Beschreibung

Gegenstand der Erfindung ist eine Vorrichtung zum Abziehen eines Lichtwellenleiters aus einem angetriebenen rotierenden Teller, bei dem der Lichtwellenleiter in eine kreisförmige Ausnehmung am Rande der Stirnfläche des Tellers eingelegt ist und über eine freilaufende Umlenkrolle mit raumfester Achse abgezogen und einer Verarbeitungsvorrichtung zugeführt wird.

Bei den bekannten Vorrichtungen der vorstehend beschriebenen Art befindet sich die Umlenkrolle in der Mitte über der Drehachse des Tellers, und der Lichtwellenleiter wird nach dem Austritt aus der Ausnehmung über einen koaxial auf dem Teller angeordneten Kegel einem Trichter zugeführt, der sich ebenfalls koaxial auf der Drehachse des Tellers mit der größeren Öffnung nach unten gerichtet befindet und den Lichtwellenleiter auf die Umlenkrolle führt. Die kegel- und trichterförmigen Bauelemente sind erforderlich, um selbst bei rotierendem Teller ein Wandern des Punktes um den Umfang der Ausnehmung zu ermöglichen, an dem der Lichtwellenleiter aus dem Teller heraustritt. Diese Vorrichtungen haben den Nachteil, daß die koaxial zur Tellerachse angeordneten kegel- und trichterförmigen Bauteile eine flächensparende Anordnung der Teller in unterschiedlichen Abständen vom Boden verhindern. Sie erschweren auch das Einfädeln eines neuen Lichtwellenleiters in die Vorrichtung.

Der Erfindung liegt die Aufgabe zugrunde, eine Vorrichtung der eingangs beschriebenen Art anzugeben, die eine flächensparende Aufstellung der Teller ermöglicht und das Einfädeln eines neuen Lichtwellenleiters erleichtert.

Diese Aufgabe wird erfindungsgemäß dadurch gelöst,

- daß das Abziehen des Lichtwellenleiters über eine Umlenkrolle erfolgt, die in einer Ebene liegt, die senkrecht zu der Tellerfläche steht und an einer Stelle des Umfangs der Ausnehmung tangential zu deren mittlerem Durchmesser verläuft, und
- daß ein sich über den größeren Teil des Abstandes der Umlenkrolle zum Teller erstreckender Hebel vorhanden ist, der an seinem dem Teller benachbarten Ende eine offene oder geschlossene Öse zum Führen des Lichtwellenleiters aufweist und der an seinem der Rolle benachbarten Ende in der Abzugsebene oder parallel dazu schwenkbar an einer senkrecht zu der Abzugs-Ebene stehenden drehbaren Hebelachse befestigt ist, über die er beim Ausschwenken über seine Mittellage hinaus einen geeigneten Geber bestätigt, der die Drehzahl des Antriebs für den Teller beeinflußt.

Der besondere Vorteil der erfindungsgemäßen Vorrichtung ist darin zu sehen, daß der Lichtwellenleiter nur in einer Ebene umgelenkt wird. Die über den Geber ermöglichte Beeinflussung der Drehzahl des Antriebs für den Teller ermöglicht es, den Punkt, an dem der Lichtwellenleiter aus dem Teller heraustritt, weitgehend in der durch die Umlenkrolle bestimmten Ebene zu halten, so daß sich kegel- und trichterförmige Führungsmittel erübrigen und ein leichtes Einfädeln eines neuen Lichtwellenleiters in die Vorrichtung möglich ist.

In Weiterbildung der Erfindung für Anlagen, in denen aus mehreren Tellern abgezogen wird, die unterschiedlichen Abstand zum Boden haben, ist vorgesehen, daß die in unterschiedlichem Abstand vom Boden aufeinander folgenden Teller einander bis annähernd zur Hälfte ihres Durchmessers überlappen und die Drehachsen der Teller in einer Ebene stehen. Dies ermöglicht eine flächensparende Aufstellung der Vorrichtungen.

Um weiterhin für die Beeinflussung der Drehzahl der Teller stets von den gleichen Bedingungen ausgehen zu können ist es vorteilhaft, bei unterschiedlichem Abstand zwischen Umlenkrolle und Teller den Abstand zwischen dem jeweiligen Teller und der ihm zugeordneten Hebelachse stets gleich zu halten. Man ist dann bei der Bemessung des Abstandes zwischen der Hebelachse und der Umlenkrolle frei.

Die Figuren zeigen in zum Teil schematischer Darstellung eine Vorrichtung gemäß der Lehre der Erfindung mit drei Tellern. Dabei sind gleiche Bauteile mit gleichen Bezugszeichen versehen.

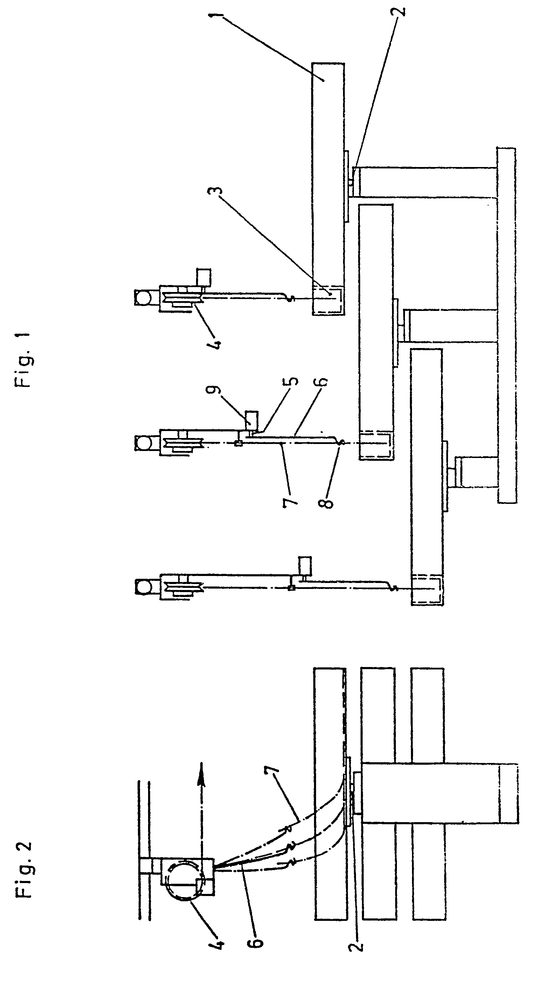

Die drei Teller 1 in Fig. 1 sind in unterschiedlicher Höhe über dem Boden angebracht, wobei ihre Drehachsen 2 in einer Ebene liegen. Sie überlappen einander etwa bis zur Hälfte ihres Durchmessers. Jeder Teller 1 hat an seinem Umfang eine kreisförmige Ausnehmung 3 zur Aufnahme der Lichtwellenleiter. In einer Ebene, die senkrecht zur Tellerfläche und an einer Stelle des Umfangs der Ausnehmung 3 tangential zu deren mittlerem Durchmesser verläuft, ist oberhalb des Tellers 1 auf einer raumfesten Achse eine frei drehbare Umlenkrolle 4 vorgesehen. In der dargestellten Ausführungsform liegen die Umlenkrollen 4 der drei Vorrichtungen in gleicher Höhe. Unterhalb jeder Umlenkrolle 4 befindet sich jeweils im gleichen Abstand zum Teller eine Hebelachse 5, um die jeweils ein Hebel 6 schwenkbar ist. Wie aus Fig. 2 erkennbar, kann der Hebel so innerhalb gewisser Grenzen dem Auswandern des Lichtwellenleiters 7 folgen, der durch die Öse 8 an seinem dem Teller 1 zugewandten Ende geführt ist. Die Bewegung des Hebels 6 innerhalb der vorgesehenen Grenzen betätigt einen Geber 9, zum Beispiel ein Potentiometer, das die Drehzahl des zugehörigen Tellers 1 derart beeinflußt, daß der Hebel 6 wieder in seine Mittellage gelangt.

Die aus Fig. 1 erkennbare Anordnung der erfindungsgemäßen Vorrichtungen ermöglicht ein flächensparendes Aufstellen vor der Verarbeitungsvorrichtung, die vor oder hinter der Papierebene zu denken ist.

**Patentansprüche**

1. Vorrichtung zum Abziehen eines Lichtwellenleiters aus einem angetriebenen rotierenden Teller, bei dem der Lichtwellenleiter in eine kreisförmige Ausnehmung am Rande der Stirnfläche des Tellers eingelegt ist und über eine freilaufende Umlenkrolle mit raumfester Achse abgezogen und einer Verarbeitungsvorrichtung zugeführt wird, *dadurch gekennzeichnet,*

- daß das Abziehen des Lichtwellenleiters (7) über eine Umlenkrolle (4) erfolgt, die in einer Ebene liegt, die senkrecht auf der Tellerfläche (1) steht und an einer Stelle des Umfangs der Ausnehmung (3) zu deren mittlerem Durchmesser verläuft, und
- daß ein sich über den größeren Teil des Abstandes der Umlenkrolle (4) zum Teller (1) erstreckender Hebel (6) vorhanden ist, der an seinem dem Teller (1) benachbarten Ende eine offene oder geschlossene Öse (8) zum Führen des Lichtwellenleiters (7) aufweist und der an seinem gegen die Umlenkrolle (4) gerichteten Ende in der Abzugsebene oder parallel dazu schwenkbar an einer senkrecht zu der Abzugs-Ebene stehenden drehbaren Hebelachse (5) befestigt ist, über die er beim Ausschwenken über seine Mittellage hinaus einen geeigneten Geber (9) betätigt, der die Drehzahl des Antriebs für den Teller (1) beeinflußt.

2. Vorrichtung nach Anspruch 1 für Anlagen, in denen aus mehreren Tellern abgezogen wird, die unterschiedlichen Abstand zum Boden haben, *dadurch gekennzeichnet,* daß die in unterschiedlichem Abstand vom Boden aufeinander folgenden Teller einander bis annähernd zur Hälfte ihres Durchmessers überlappen und die Drehachsen (2) der Teller (1) in einer Ebene liegen.

3. Vorrichtung nach Anspruch 2, *dadurch gekennzeichnet,* daß bei unterschiedlichem Abstand zwischen Umlenkrolle (4) und Teller (1) der Abstand zwischen dem jeweiligen Teller (1) und der ihm zugeordneten Hebelachse (5) stets gleich ist.

**Claims**

1. Device for drawing off an optical fibre from a driven rotating turntable, in which the optical fibre is placed in a circular opening at the edge of the front surface of the turntable and is drawn off via a free-running guide roller with space-fixed spindle and fed to a processing device, characterized in that

- the optical fibre (7) is drawn off via a guide roller (4) which lies in a plane which is perpendicular to the turntable surface (1) and extends at one point of the periphery of the opening (3) with respect to its central diameter, and
- there is present a lever (6) which extends over the greater part of the distance between the guide roller (4) and the turntable (1), which has at its end adjacent to the turntable (1) an open or closed eyelet (8) for guiding the optical fibre (7), and which is fastened at its end directed towards the guide roller (4), so as to be pivotable in the drawing-off plane or parallel thereto, to a rotatable lever spindle (5), perpendicular to the drawing-off plane, via which it activates a suitable pickup (9) when it swings out beyond its mid-position, which pickup influences the speed of the drive for the turntable (1).

2. Device according to claim 1 for systems where the drawing-off is from a plurality of turntables having different distances to the ground, characterized in that the successive turntables at a different distance from the ground overlap one another up to approximately half their diameter, and the axes of rotation (2) of the turntable (1) lie in one plane.

3. Device according to claim 2, characterized in that where there is a different distance between guide roller (4) and turntable (1), the distance between the respective turntable (1) and its associated lever spindle (5) is always the same.

**Revendications**

1. Dispositif pour tirer une fibre optique d'un disque entraîné en rotation pour lequel la fibre optique est introduite dans un évidement de forme circulaire sur le bord de la face frontale du disque, et par l'intermédiaire d'un rouleau de renvoi qui fonctionne librement, est tiré avec un axe fixe dans l'espace et est amené à un dispositif de façonnage, caractérisé en ce que :

- le tirage de la fibre optique (7) s'effectue par l'intermédiaire d'un rouleau de renvoi (4) qui se situe dans un plan qui se place perpendiculairement à la surface du disque et se déroule à un emplacement du pourtour de l'évidement (3) vers son diamètre moyen,
- et qu'un levier (6) - qui s'étend au-delà de la plus grande partie de l'intervalle du rouleau de renvoi (4) vers le dispositif (1) - est présent, qui à son extrémité voisine du disque (1) possède un oeillet (8), ouvert ou fermé pour conduire la fibre optique (7) et qui à son extrémité dirigée vers le rouleau de renvoi dans le plan d'étirage ou parallèlement à celui-ci, est fixé d'une manière tournante à un axe de levier (5) rotatif qui se situe perpendiculairement au plan d'étirage ou parallèlement à celui-ci, par l'intermédiaire duquel il actionne par pivotement par l'intermédiaire de sa position médiane vers l'extérieur, un émetteur (9) approprié qui exerce une influence sur la vitesse de rotation de la commande pour le disque (1).

2. Dispositif selon la revendication 1, pour des installations dans lesquelles, on étire de nombreux disques qui ont des distances variées du sol, caractérisé en ce que les disques qui se suivent les uns sur les autres à des distances variées du sol, se recouvrent l'un l'autre jusqu'à à peu près la moitié de leur diamètre et que les axes de rotation (2) du disque (1) se placent dans un plan.

3. Dispositif selon la revendication 2, caractérisé en ce que pour une distance différente entre le rouleau de renvoi (4) et le disque (1), la distance entre le disque correspondant (1) et l'axe du levier (5) qui lui est associé, est toujours la même.

Fig. 1

Fig. 2